# EUROPEAN PATENT APPLICATION

(11) **EP 1 129 811 A2**
(43) Date of publication of application: **05.09.2001**
(21) Application number: 01301464.2
(22) Date of filing: 19.02.2001
(51) Int. Cl.: B23K 20/12

(54) **friction stir welding method**

(30) Priority: 21.02.2000 JP 2000042290
(71) Applicant: Hitachi, Ltd., Chiyoda-ku, Tokyo 101-8010 (JP)
(72) Inventor: Matsunaga, Tetsuya, Kudamatsu-shi, Yamaguchi 744-0002 (JP); Takai, Hideo, Hikari-shi, Yamaguchi 743-0031 (JP); Hosoda, Yuji, Niihari-gun, Ibaraki 315-0054 (JP); Ezumi, Masakuni, Kudamatsu-shi, Yamaguchi 744-0002 (JP); Fukuyori, Kazushige, Kudamatsu-shi, Yamaguchi 744-0031 (JP)
(74) Representative: Paget, Hugh Charles Edward

(57) **Abstract**

First and second members (10,20) are joined by friction stir welding. A portion of at least the first member (10), to which portion load is applied during the friction stir welding, is supported during the welding on a counter-support (200) provided at a rear side of the first member through a removable backing member (210) arranged within a space at least partly enclosed by the first member. The backing member is removed from said space after the welding. This method avoids the need for an integral member to support the welding load.

## Description

### Background of the Invention

### Technical Field

The present invention relates to a friction stir welding method, particularly of a hollow extruded frame member and a friction stir welding apparatus, a structure produced by friction stir welding and a hollow extruded frame member for use in friction stir welding. For example, the present invention is suitable for friction stir welding of aluminum alloy hollow extruded frame members used in structures such as a railway vehicle, an air plane, a building structure and the like.

### Prior Art

Friction stir welding is a method in which by rotating a round rod (here called "a rotary tool") which is inserted into a welding portion and moving the rotary tool along a welding line, the welding portion is heated, softened and plastically fluidised and is solid-state welded.

The rotary tool is comprised of a small diameter portion which is inserted into the welding portion and a large diameter portion next to the small diameter portion. The small diameter portion and the large diameter portion of the rotary tool have the same axis. The boundary or shoulder between the small diameter portion and the large diameter portion of the rotary tool is inserted a little into the welding portion. This technique is disclosed, for example, in EP-A-0797043.

During the friction stir welding with the rotary tool, a large load acts on a hollow extruded frame member being subjected to the welding. For this reason, when hollow extruded frame members are welded, a rib is provided at a welding portion, and this load is supported by this rib. Accordingly, the weight of the hollow shape extruded frame member is increased. In a railway vehicle or an air plane in which a light weight structure is aimed at, the increase in weight is a large problem.

### Summary of the Invention

An object of the present invention is to provide a friction stir welding method wherein such a weight increase in a hollow extruded frame member can be reduced or avoided.

According to the invention there is provided a method of joining first and second members by friction stir welding, wherein a portion of at least said first member, to which portion load is applied during the friction stir welding, is supported during the welding on a counter-support provided at a rear side on the first member through a removable backing member arranged within a space at least partly enclosed by said first member, and said backing member is removed from said space after the welding.

The invention in other aspects is set out in the claims.

### Brief Description of the Drawings

Embodiments of the invention in all its aspects will now be described by way of non-limitative example with reference to the accompanying drawings, in which:-
Fig. 1 is a longitudinal cross-sectional view before welding of members in a friction stir welding method which is one embodiment of the present invention;
Fig. 2 is a side view showing a first welding apparatus for friction stir welding according to the present invention;
Fig. 3 is a longitudinal cross-sectional view, on line III-III in Fig. 4, of hollow extruded frame members to be subjected to friction stir welding;
Fig. 4 is a perspective view showing a car body of a railway vehicle;
Fig. 5 is a side view showing a second welding apparatus for friction stir welding according to the present invention;
Fig. 6 is a longitudinal cross-sectional view of a backing plate used in a friction stir welding method which is another embodiment of the present invention;
Fig. 7 is a longitudinal cross-sectional view showing a welding portion in a friction stir welding method which is yet another embodiment of the present invention;
Fig. 8 is a longitudinal cross-sectional view showing a welding portion in a friction stir welding method which is further embodiment of the present invention; and
Fig. 9 is a longitudinal cross-sectional view showing a welding portion in a friction stir welding method of another embodiment of the present invention.

### Description of the Preferred Embodiments

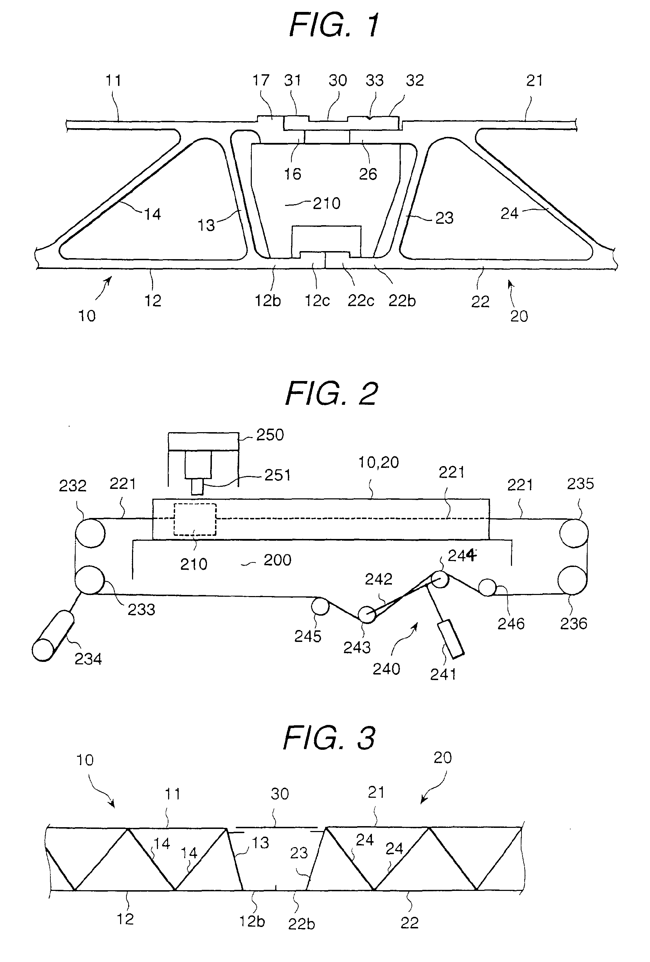

One embodiment according to the present invention will be explained referring to Fig. 1 to Fig. 4. A railway vehicle structure body 100 is comprised of a side structure body 101 constituting a side face, a roof structure body 102 constituting a roof, a stand frame 103 constituting a floor, and a side structure body 104 constituting an end portion. Each of the side structure body 101, the roof structure body 102, and the frame stand 103 is constituted respectively by welding plural hollow extruded frame members. The longitudinal direction of the hollow extruded frame member is in the longitudinal direction of the car body of the railway vehicle. The hollow extruded frame member is made of an aluminum alloy. A structure of hollow extruded frame members 10 and 20 for a portion of the side structure body 101 will be explained. Other portions and other structure bodies are similar to the above.

The hollow extruded frame member 10 is comprised of two sheet face plates 11 and 12, and plural ribs 13 and 14 connecting the two face plates 11 and 12, all integrally extruded. The face plates 11 and. 12 are substantially parallel. The ribs 13 and 14 are inclined. The ribs 13 and 14 are arranged as a truss structure.

The hollow extruded frame member 20 is likewise comprised of two sheet face plates 21 and 22 and plural ribs 23 and 24 connecting the two face plates 21 and 22. The face plates 21 and 22 are substantially parallel. The ribs 23 and 24 are inclined. The ribs 23 and 24 are arranged as a truss structure.

An end portion 12b of the face plate 12 which is positioned at the outer face of the car body 100 of the railway vehicle projects towards the adjacent frame member 20 more than the end portion of the face plate 11 at the inner side of the car body 100. The plate thickness of the portion 12b is larger than the general plate thickness of the face plate 12. At the end of the portion 12b, a rib or raised portion 12c projecting upwardly is provided. The frame member 20 is similarly provided with an end portion 22b of face plate 22, with a raised portion 22c. The raised portions 12c and 22c are butted and joined by friction stir welding.

The overall width of the two raised portions 12c and 22c is larger than the diameter of the large diameter portion of the rotary tool used for this friction stir welding. The boundary of the large diameter portion and the small diameter portion of the rotary tool is brought into the upper part of the raised portions 12c and 22c from the upper side.

The end portions of the face plates 11 and 21 are connected by a connection member 30. At the end portion 16 of the face plate 11, a recess or rebate is provided defined by a surface facing towards the interior of the car and a surface facing laterally of the frame member. The end portion 16 of the face plate 11 also has an upward rib or raised portion 17. One end portion of the connection member 30 is butted to the side face of the recess, so that this end portion of the connection member 30 is overlapped on and seated on the end portion 16. These butted end portions are joined by friction stir welding from the upper side. This welding position is directly above the end portion 12b. For this purpose, the end portion of the connection member 30 has a rib or raised portion 31. The total width of the two raised portions 17 and 31 is larger than the diameter of the large diameter portion of the rotary tool used. The insertion position of the large diameter portion of the rotary tool is similar to that of the case of the butted portions 12b and 22b described above.

Likewise at the end portion 26 of the face plate 21, a recess or rebate is provided, with surfaces facing to the interior of the car and laterally. The second end portion of the connection member 30 is overlapped and seated on the end portion 26, and joined to it by overlap friction stir welding. The location of this friction stir welding is directly above the end portion 22b. A groove 33 is used for locating the tool during the welding of the connection member 30 and the face plate 22.

The depth of the recess or rebate of the projecting end portions 16 and 26 is the same as the thickness of the connection member 30 (ignoring the ribs 31). The upper face of the connection member 30 and the upper faces of the face plates 11 and 12 after welding are flush, e.g. coplanar.

This second end portion of the connection member 30 to be joined to the face plate 21 has a rib or raised portion 32 whose width is larger than the diameter of the large diameter portion of the rotary tool used for this welding. The insertion amount of the large diameter portion of the rotary tool is similar to that of the case of the butted end portions 12b and 22b. The raised portion has a V form groove 33. By detection of the groove 33 by an optical sensor system, the rotary tool axis is kept at the position of the groove 33. Likewise, in the welding of butted portions, the position of the butted surfaces is detected and the rotary tool axis kept at this position.

When the connection member 30 is being joined by welding, a backing member 210, herein called a backing plate, is arranged in the space between the end portions of the two hollow extruded frame members 10 and 20. The backing plate 210 is supported on the face plates 12b and 22b. The upper face of the backing plate 210 is positioned below the welding portions of the member 30. The height of the backing plate 210 is less than the height between the upper face of the face plates 12b and 22b and the lower faces of the projecting end portions 16 and 26. The gap between the end portions 16,26 and the plate 210 is not large.

Since the backing plate 210 is beneath both welding positions of the member 30, and is supported on both end portions 12b,22b, it remains in position and is not likely to fall down, even if the welding is not carried out simultaneously at the two welding positions.

The procedure of the friction stir welding will be explained (see Fig. 2). First of all, the frame members 10 and 20 are mounted on a frame stand 200 and fixed, with the face plates 11 and 21 above and the face plates 12 and 22 below. The end portions 12b and 22b are butted.

Next, using the space between the hollow extruded frame members 10 and 20 above the end portions 12b and 22b, friction stir welding is carried out from above to join these portions. In other words, the rotary tool is inserted into the butted portions from above. Since the raised portions 11c and 22c are provided, any gap at the butted portion is buried. The lower faces of the face plates 12 and 22 are welded together substantially flush.

During this friction stir welding, burrs caused by the welding and the remainder of the raised portions 12c and 22c are cut off. The rotary tool has a cutter at an outer face in a radial direction of the large diameter portion. By this cutter, the burrs are cut off, and the upper parts of the raised portions 12c and 22c are also cut off. Next, the cut-off chips are removed.

Next, the backing plate 210 is arranged in the space between the end portions of the hollow extruded frame members 10 and 20. In Fig. 2, the welding is carried out from the left side to the right side. To the outside from the right side of the hollow extruded frame members 10 and 20, the backing plate 210 is provided, and by hand the backing plate 210 is mounted on the face plates 12b and 22b at the left end of the hollow extruded frame members 10 and 20. To the left end of the backing plate 210 a left end chain 221 is connected. By pulling the backing plate 210 by hand using a rope, the backing plate 210 is moved to the right end. The left end chain 221 is entered into the end portion of the hollow extruded frame members 10 and 20. When the backing plate 210 is moved to the right end, the right end chain 221 is connected to the right end of the backing plate 210.

On an extension line of the left and the right of the above stated space, sprockets 232 and 235 are mounted respectively. The chain 221 is arranged in an endless form through the backing plate 210. There are means 240 for tensioning or slacking off the chain 221. When a rod of a cylinder means 241 is extended, a link 242 rotates and the chain 221 is tensioned. To both ends of the link 242, sprockets 243,244,245,246 for supporting the chain 221 are provided.

When the chain 221 is slacked off or the backing plate 210 is disconnected from the chain 221, to prevent the chain 221 from coming off the sprocket, rollers are provided at a vicinity of the necessary sprockets. By these sprockets and the roller, the chain 221 is sandwiched. Reference numerals 233 and 236 indicate further sprockets.

The friction stir welding means 250 having a friction stir welding rotary tool 251 is mounted over the stand frame 200 and is moved along the frame stand 200 by a drive (not shown). The rotary tool 251 can move up and down.

When the chain 221 is connected to the backing plate 210, and the backing plate 210 is mounted on the face plates 12b and 22b, the chain 221 is tensioned by means 240. On the upper face and lower face of the backing plate 210, lubricant oil or grease is coated. Alternative lubricant is put on the upper face of the end portions 12b and 22b and the lower face of the end portions 16 and 26. The length of the backing plate 210 in the longitudinal direction of the members is several 10 cm degree. The backing plate 210 is made of a ferrite system.

Next, the connection member 30 is mounted on the end portions 16 and 26 and butted to the rebate of the face plate 11. Next, the connection member 30 is welded temporarily to the face plates 11 and 21. This temporary welding is carried out intermittently. Or, by pressing the connection member 30, the connection member 30 is restrained.

Next, by inserting the rotary tool 251 from above, friction stir welding is started from one side. The face plate 11 is butt welded to the connection member 30. The face plate 12 is joined by overlap welding to the connection member 30. The end portions 16 and 26 are bent a little downwards during the welding.

As the rotary tool 251 travels, the sprocket 233 is rotated by a drive 234 and the backing plate 210 is moved. The backing plate 210 is moved synchronously with the travel of the rotary tool 251. Since the backing plate 20 is pulled from both sides, its movement is easily synchronised with the movement of the rotary tool 251.

When the welding of the two ends of the connection member 30 has finished, the chain 221 is slackened off by the means 240. Next, the interconnection between the right portion of the backing plate 210 and the right end chain 221 is released. The right end chain 221 is removed by the hand.

Next, outside of the left end of the hollow extruded frame members 10 and 20, the left chain 221 is pulled up by the hand, and the chain 221 and the backing plate 210 are pulled down from the space between the frame members.

With this arrangement, the load put on the end portions 16 and 26 by the rotary tool 251 is supported on the stand frame 200 through the backing plate 210 and the plate end portions 12b and 22b. Namely, since the end portions 12b and 22b are applied to the stand frame 200 and the backing plate 210 is applied to the end portions 12b and 22b and the face plates 11 and 21 (the end portions 16 and 26) are applied to the backing plate 210, the end portions 16 and 26 are supported during the friction stir welding. Accordingly, the end portions 16 and 26 and the adjacent parts of the plates 11 and 21 are not much bent, and further the ribs 13 and 14, and 23 and 24 are not much deformed. Accordingly, the ribs 13 and 23 can be formed thin. As a result, the hollow extruded frame members 10 and 20 can be formed with a light structure, and a structural body having a light weight can be obtained.

Strictly speaking to weld the butted portion between the face plate 11 and the connection member 30, the projection 16 under the member 30 is unnecessary. However, this projection 16 is provided, so that the softened metal does not contact the backing plate 210. Further, in case the insertion amount of the rotary tool 251 is excessive, since there exists the thickness of this projection 16, the rotary tool 251 is not likely to contact the backing plate 210. Accordingly, the backing plate 210 is not likely to weld to the frame member 10. As a result, the backing plate 210 can be moved easily. Further, since the projection 16 is provided, lubricating oil or grease cannot contact the welding portion.

To facilitate the movement of the backing plate 210, caterpillar tracks may be provided on the backing plate 210. The caterpillars are divided into the left portion and the right portion.

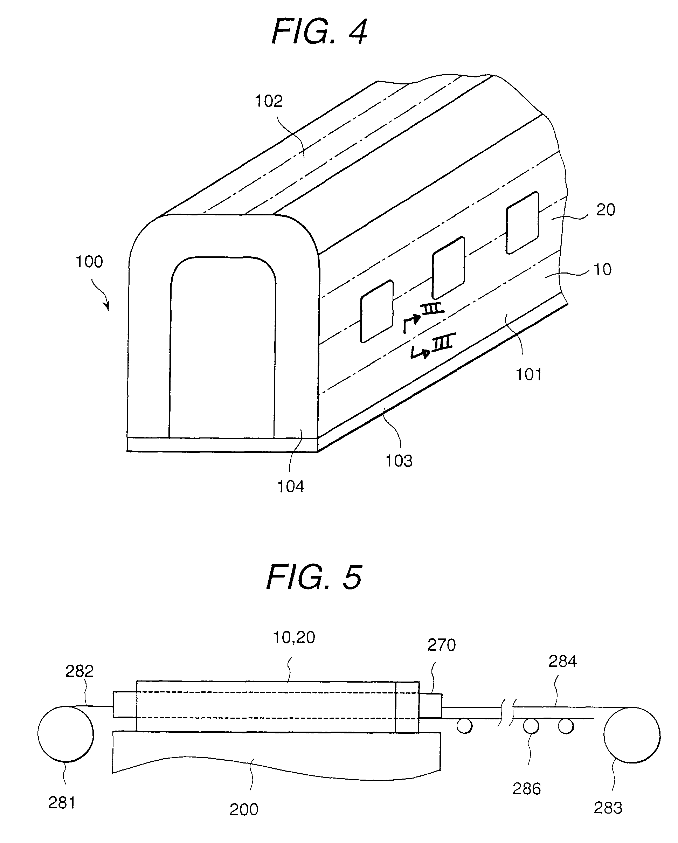

Referring to Fig. 5, another embodiment of the backing plate will be explained. During the friction stir welding time, the backing plate 270 is not moved. The length of the backing plate 270 is longer a little than a length of the hollow extruded frame members 10 and 20. After the welding of the end portions 12b and 22b, a rope 282 (or a chain) is connected to the left end of the backing plate 270 which is laid on rollers 286 at the right side of the frame stand 200 and is pulled by a winch 281, to draw the backing plate 270 into position on the end portions 12b and 22b. This condition is shown in Fig. 5.

After the friction stir welding of the connection member 30, the rope 282 is taken off from the backing plate 270. Next, by a right end winch 283, the backing plate 270 is pulled to the right onto the rollers 286. The winch 283 and the backing plate 270 are connected by a rope 284 (or chain).

The backing plate 270 may be inserted to the space between the members from above by a crane. At immediately before the space, the backing plate 270 is inserted with an inclination state to the space.

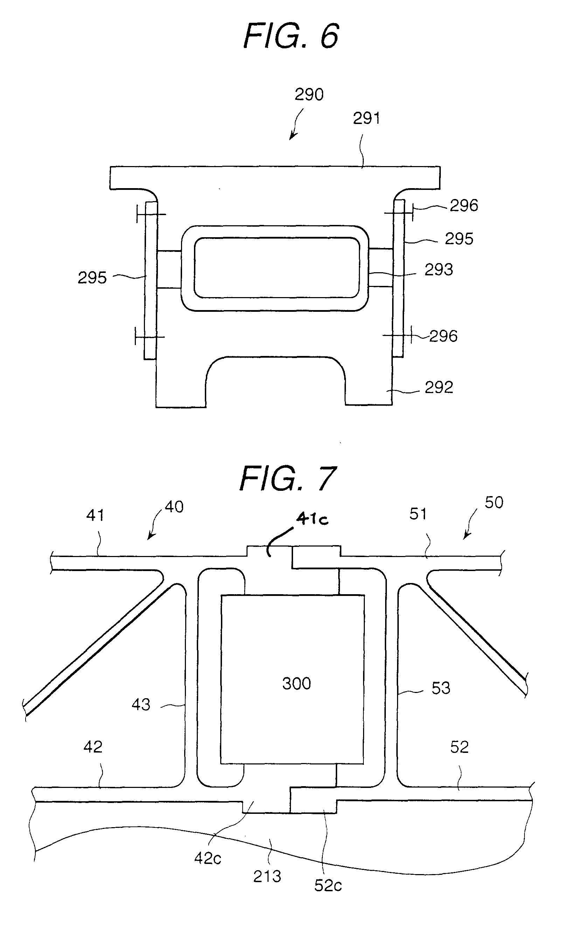

Fig. 6 shows a backing plate 290 which is a modified form of the backing plate 270. The backing plate 290 is comprised of an upper block 291, a lower block 292, an air sack 293 in the form of a hose arranged between the two blocks 291 and 292. The weight of the upper block 291 is more than that of the lower block 292. The blocks 291 and 292 are connected at side faces by links 295 and pins 296 and 297. An upper portion of the link 295 has an elongate hole in which the pin 296 can move up and down. These links 295 are arranged intermittently in the longitudinal direction of the backing plate 290. The air sack 294 extends in the longitudinal direction of the lower block 292. The length of the backing plate 290 is similar to that of the backing plate 270.

Two methods of use of the backing plate 290 are the following. In one method, after the friction stir welding of the connection member 30, pressurised air is passed to the air sack 293 to lift the upper block 291. The projecting end portions 16 and 26, which have bent downwardly as described above, are bent up. Next, the air is discharged from the air sack 293. Due to its weight the upper block 291 can be separated and be detached from the end portions 16 and 26. If required, the upper block 291 may be hammered down. In this way, a gap can occur easily between the upper block 291 and the end portions 16 and 26, and the backing plate 290 can be pulled out easily.

In a second method, before the welding, the upper block 291 is lifted by the air sack, preferably after the temporary welding of the connection member 30. In this condition, the friction stir welding of the connection member 30 is carried out. After the friction stir welding, the air is discharged from the air sack 293, which can be removed as described above.

Since the lower block 292 is provided, the air support 293 is not contacted to the raised portions 12c and 22c, so that damage of the air sack 293 can be prevented.

In the embodiment of Fig. 7 two face plates 51 and 52 of a hollow extruded frame member 50 are butted to rebates of end portions of the two face plates 41 and 42 of the adjacent hollow extruded frame member 40. The respective face plates 51 and 52 are joined by friction stir welding from outside the hollow extruded frame members 40,50 to the face plates 41 and 42. The upper and lower abutment portions project from transverse ribs 43 and 53. A backing plate 300 is mounted on the lower projection 42c and supports the upper projection 41c. The rib 43 is orthogonal to the face plates 41 and 42. The rib 53 is orthogonal to the face plates 51 and 52. The face plates 51 and 52 of the hollow extruded frame member 50 overlap as shown to the projections 41c and 42c. The lower faces of the frame members 40 and 50 are mounted on a frame stand 213.

The working procedure will be explained. A rope 282 (shown in the embodiment of Fig. 5) is inserted into a space at the end portion of the hollow extruded frame member 40 which is laid on the frame stand 213. Next, the frame members 40 and 50 are butted together and the butted portions are joined by temporary fixing welding. Next, using the rope 282, the backing plate 300 is pulled into the space between the two frame members 40 and 50. When the welding portion is supported by the backing plate 300, the friction stir welding is carried out from above. Next, another end rope 284 of the backing plate 300 is pulled to withdraw the backing plate 300. The connection of the backing plate 300 and the rope 282 is released. The rope 282 remains inserted in the space.

Next, the rope 282 outside at the left end of the hollow extruded frame members 40 and 50 is separated into two in the left direction and the right direction. Next, the structure body which is comprised of the welded frame members 40 and 50 is inverted on the stand 213. The rope 282 remains in the space between them. The rope portions 282, which are separated in the left direction and the right direction, are connected to each other, and the rope 282 is connected to the backing plate 300.

Next, by pulling the rope 282, the backing plate 300 is entered again into the space and from above the second friction stir welding is carried out. Next, the connection of the rope 282 and the backing plate 300 is released, and by pulling the rope 284 the backing plate 300 is drawn.

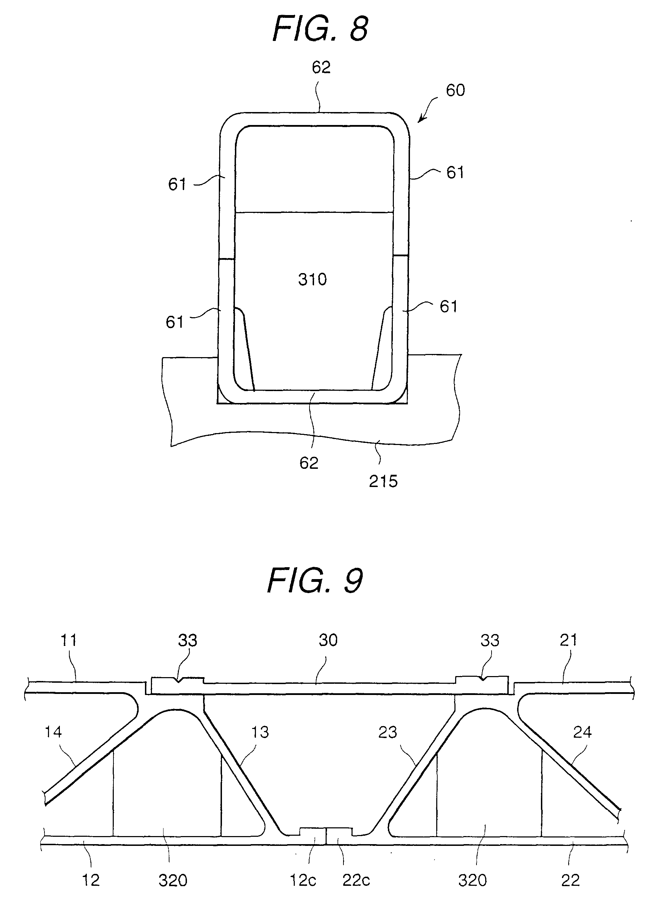

In the embodiment of Fig. 8, the two members 60 to be joined are C shape hollow extruded frame members, each having two substantially parallel arms 61 and a base 62 connecting the arms 61. The two arms 61 of one frame member 60 are butted to the arms 61 of the other frame member 60 and the butting pairs are joined by friction stir welding. in the space within the butted frame members 60 a backing plate 310 is inserted. The frame members 60 are mounted on a frame stand 215. The backing plate 310 may be inserted from above by a crane, before the frame members are laid on the stand. The stand 215 has a recess to position the lower frame member 60. The friction stir welding is then carried out at the same time from the left and from the right, at the butted ends of the arms 61, which are supported against the forces applied by the backing plate 310.

In the embodiment of the present invention of Fig. 9, backing plates 320 are arranged in the spaces between ribs 13,14 and 23,24 of the respective frame members. The backing plate 320 is similar to the backing plate 270 or the backing plate 290. The upper surface of the backing plate 320 has a circular shape which corresponds to the shape of the rear face of the welding portion which is at an apex of the truss structure of the end portion of the hollow extruded frame member 10, where the connection member 30 and the frame members 10 and 20 are joined. The apex of the truss structure exists on an extension line of a normal line in a thickness direction of the frame member, corresponding to the position of friction stir welding. One such truss structure is comprised of the ribs 13 and 14 and the face plate 12. The other such truss structure is comprised of the ribs 23 and 24 and the face plate 22. The two ends of the connection member 30 are connected to the apexes by overlap friction stir welding, using aligning grooves 33. In this arrangement the inclination angle of the ribs 13 and 23 can approach that of the ribs 14 and 24.

The upper portion of the backing plate 320 may be formed with a circular shape hose. A diameter of the hose is a size which can contact to a circular arc of the rear face of the welding portion. The air pressure of the hose is set larger that the air pressure of the lower air sack.

In summary, in the present invention, since the load applied during the friction stir welding is carried by the backing plate or member, the plate thickness of the hollow extruded frame member can be reduced, so that a low weight of the hollow extruded frame member and of the welded structure can be achieved.

Though here called a plate, the backing member can be a body of any suitable shape suitable to transmit the welding load. The counter-support can be a fixed support such as a stand, as illustrated, or as illustrated in Fig. 6 may be a second friction stir welding tool operating simultaneously from the other side of the members being welded.

## Claims

1. A method of joining first and second members (10,20; 40,50; 60) by friction stir welding, wherein a portion of at least said first member (10,40,61), to which portion load is applied during the friction stir welding, is supported during the welding on a counter-support (200; 213) provided at a rear side of the first member through a removable backing member (210; 270; 290; 300; 310; 320) arranged within a space at least partly enclosed by said first member, and said backing member is removed from said space after the welding.

2. A method according to claim 1, wherein said backing member bears on a portion (12b,22b; 42c; 61; 12) of said first member which is directly supported by said counter-support.

3. A method according to claim 1 or 2, wherein said counter-support is a stand carrying said first member.

4. A method according to claim 1, 2 or 3, wherein said space is constituted by said first member and said second member.

5. A method according to claim 1, 2 or 3, wherein said space is constituted by only said first member.

6. a method according to any one of claims 1 to 5, wherein said backing member is supported by at least said first member.

7. A method according to any one of claims 1 to 6, wherein said backing member (210) is moved during the welding in the welding line direction along said first member.

8. A method according to any one of claims 1 to 7, wherein after said backing member (290) is arranged with respect to said first member, it is expanded to support a welding portion of at least said first member, and after the friction stir welding is contracted.

9. A method according to claim 8, wherein expansion of the backing member is performed by inflation of an air sack.

10. A method according to any one of claims 1 to 7, wherein by expansion of the backing member the welded portion of at least said first member is bent after the welding to a desired position.

11. A method according to claim 10, wherein expansion of the backing member is performed by inflation of an air sack.

12. A method according to claim 1, wherein said members (60) have at least portions of C-shape cross-section, and a first said member is arranged on a stand with its C-shape open upwards, said backing member (310) is inserted therein from above, the second member is assembled on the first member with its C-shape open downwards and the friction stir welding is carried out from at least one side of the assembled members (60).

13. A method of joining two members (10,20) by friction stir welding, wherein each member has opposed, spaced plates (11,12,21,22), comprising:
(i) mounting a first plate of said first member and a first plate of said second member on a stand in position to be welded;
(ii) carrying out friction stir welding of said first plates to each other using a rotary tool from above;
(iii) mounting a backing member (210) on said first plates (12,22) at a position where said backing plate is below welding locations at which the respective second plates (11,21) of said first and second members are to be welded to respective portions of a connection member which is to join said respective second plates;
(iv) carrying out friction stir welding at both said welding locations which are supported during the welding by said backing member; and
(v) removing said backing member.

14. A method according to claim 13, wherein said backing member contacts said first plates below the welding locations of said connection member and said second plates.

15. A friction stir welding apparatus comprising:
a stand (200) for mounting a first member and a second member to be welded;
a backing member (210) suitable to be arranged in a space within at least said first member during welding;
drive means (232 - 246) including a flexible pulling element (221) for pulling said backing member from one end to another end of a welding line; and
a friction stir welding means movable relative to said stand and along the welding line for welding said first member and said second member when mounted on said stand from above;
said pulling element and said backing member being attachable and detachable.

16. A structure comprising:
a first member (10) having a first plate (12), a second plate (11) substantially parallel to said first plate, and a rib (13) connecting said first plate and said second plate; and
a second member (20) having a first plate (22), a second plate (21) substantially parallel to said first plate, and a rib (23) connecting said first plate and said second plate;
wherein:
said first plate (12) of said first member and said first plate (22) of said second member are welded together by friction stir welding;
a connection member (30) extends between said second plate (11) of said first member and said second plate (11) of said second member, and ends of said connection member are welded respectively to said second plate of said first member and said second plate of said second member by friction stir welding; and
when said first plates are laid below said second plates, the welds of said connection member and respective second plates are located in each case above a portion of one of said first plates which extends between a connection of one of said ribs and said first plate and the weld of said first plates.

17. A structure comprising:
a first member (40) having a first plate (42), a second plate (41) substantially parallel to said first plate, and a rib (43) connecting said first plate and said second plate; and
a second member (50) having a first plate (52), a second plate (51) substantially parallel to said first plate, and a rib (53) connecting said first plate and said second plate;
wherein:
said first plate of said first member and said first plate of said second member are welded together by a friction stir welding from outside the structure;
said second plate of said first member and said second plate of said second member are welded together by friction stir welding outside the structure; and
when said first plates are laid below said second plates, each said member a portion of said first plate, which extends between the weld of said first plates and said rib, is directly below a portion of said second plate which extends between the weld of said second plates and said rib.

18. An extruded frame member for use in friction stir welding comprising:
a first plate (12), a second plate (11) substantially parallel to said first plate, and plural ribs (13,14) connecting said first plate and said second plate;
wherein:
respective end portions (12b,16) of said first plate and said second plate project laterally at an end of the member from one said rib (13); and
when said first plate is laid below said second plate said projected end portion (16) of said second plate is above said projected end portion (12b) of the first plate.

19. An extruded frame member according to claim 18, wherein said projected end portion (16) of said second plate has a rebate defined by a surface facing laterally outwardly and a surface facing away from said first plate.

20. An extruded frame member according to claim 18 or 19, wherein said projected end portion (12c) of said first plate projects laterally further than said projected end portion (16) of said second plate.
